# EUROPEAN PATENT APPLICATION

(11) **EP 4 485 121 A1**
(43) Date of publication of application: **01.01.2025**
(21) Application number: 23756221.0
(22) Date of filing: 06.02.2023
(51) Int. Cl.: G06E 3/00, G02F 3/00, G06G 7/60

(54) **OPTICAL ARITHMETIC DEVICE AND METHOD FOR CONTROLLING OPTICAL ARITHMETIC DEVICE**

(30) Priority: 21.02.2022 JP 2022025020
(71) Applicant: Fujikura Ltd., Tokyo 135-8512 (JP)
(72) Inventor: OTAKE, Mamoru, Tokyo 135-8512 (JP); KUSAKA, Hiroyuki, Tokyo 135-8512 (JP); KASHIWAGI, Masahiro, Tokyo 135-8512 (JP)
(74) Representative: Plasseraud IP
(86) International application number: PCT/JP2023/003772
(87) International publication number: WO 2023/157694

(57) **Abstract**

Provided is an optical computing device that can carry out a wider variety of optical computing in comparison to a conventional optical computing device. An optical computing device (1) includes: an image sensor (12ai) including a plurality of light receiving cells; an optical modulation element (11ai) including a plurality of cells having respective phase-modulation amounts that are settable independently of each other; an optical splitter element (13ai) that splits signal light into signal light for monitoring which enters the image sensor (12ai) and signal light for computing, the signal light for computing which enters the optical modulation element (11ai); and a control section (14) that sets a phase-modulation amount of each cell of the optical modulation element (11ai) in accordance with an intensity of the signal light for monitoring detected by a light receiving cell of the image sensor (12ai), the light receiving cell corresponding to the cell.

## Description

### Technical Field

The present invention relates to an optical computing device including an optical modulation element and a method for controlling the optical computing device.

### Background Art

There has been known an optical modulation element which has a plurality of cells and which is designed to optically perform predetermined computing by causing signal light beams having respectively passed through the plurality of cells to interfere with each other. Optical computing carried out with use of such an optical modulation element has an advantage of achieving higher speed and lower electric power consumption as compared with electrical computing carried out with use of a processor. Further, multiple-stage optical computing can be achieved by causing two or more optical modulation elements arranged side by side to sequentially act on the signal light.

Patent Literature 1 discloses an optical neural network having an input layer, an intermediate layer, and an output layer. The above-described optical modulation element can be used as, for example, the intermediate layer of such an optical neural network.

### Citation List

### [Patent Literature]

[Patent Literature 1]
Specification of US Patent No. 7847225

### Summary of Invention

### Technical Problem

However, the phase modulation carried out in each cell of the optical modulation element is linear phase modulation (ϕ→ϕ+Δϕ) in which a predetermined phase Δϕ is added to a phase ϕ of signal light that has not been modulated. As such, optical computing that can be realized by the optical modulation element is only limited. For example, threshold computation carried out with use of an activation function in each neuron included in a neural network is difficult to achieve with use of the optical modulation element.

An aspect of the present invention has been achieved in light of the foregoing problem. It is an object of the aspect of the present invention to provide an optical computing device that can carry out a wider variety of optical computing in comparison to a conventional optical computing device which carries out linear phase modulation at each cell of an optical modulation element.

### Solution to Problem

An optical computing device in accordance with an aspect of the present invention is an optical computing device, including: an image sensor including one or more light receiving cells; an optical modulation element including a plurality of cells having respective phase-modulation amounts that are settable independently of each other; an optical splitter element that splits signal light into signal light for monitoring and signal light for computing, the signal light for monitoring entering the image sensor, the signal light for computing entering the optical modulation element; and a control section that sets a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.

A control method in accordance with an another aspect of the present invention is a method for controlling an optical computing device, the optical computing device including: an image sensor including one or more light receiving cells; an optical modulation element including a plurality of cells having respective phase-modulation amounts that are settable independently of each other; and an optical splitter element that splits signal light into signal light for monitoring and signal light for computing, the signal light for monitoring entering the image sensor, the signal light for computing entering the optical modulation element, the method including the step of setting a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.

### Advantageous Effects of Invention

According to an aspect of the present invention, it is possible to provide an optical computing device that can carry out a wider variety of optical computing in comparison to a conventional optical computing device which carries out linear phase modulation at each cell of an optical modulation element.

### Brief Description of Drawings

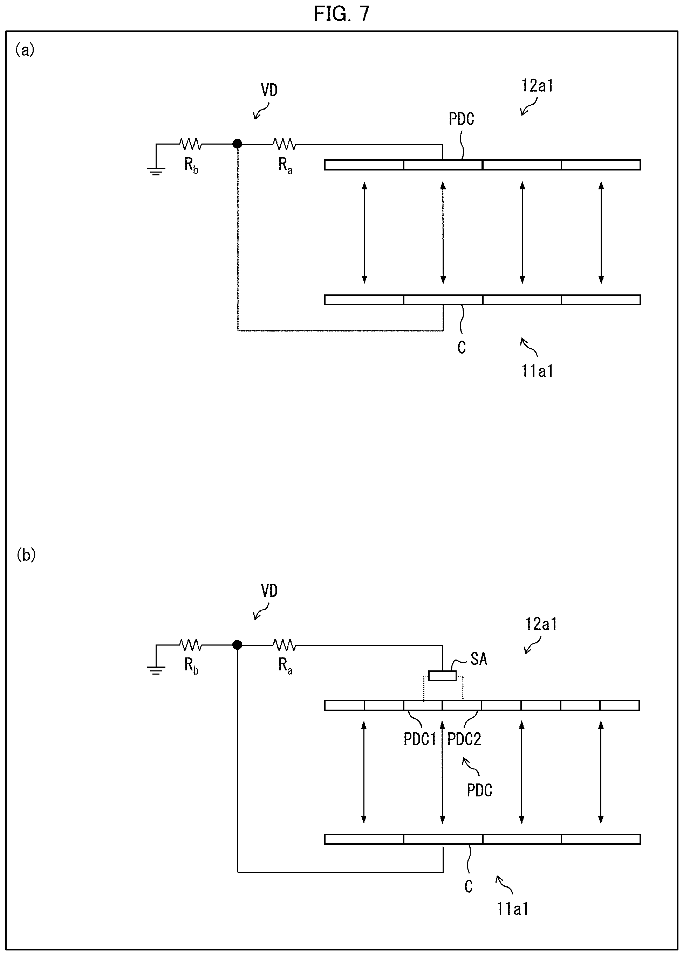

Fig. 1 is a block diagram illustrating a configuration of an optical computing device in accordance with an embodiment of the present invention.
Fig. 2 is a block diagram illustrating a variation of the optical computing device illustrated in Fig. 1.
(a) of Fig. 3 is a plan view illustrating a reflective optical modulation element included in the optical computing device illustrated in Fig. 1. (b) of Fig. 3 is a cross-sectional view of a cell included in the optical modulation element.
(a) of Fig. 4 is a plan view illustrating a transmissive optical modulation element included in the optical computing device illustrated in Fig. 2. (b) of Fig. 4 is a cross-sectional view of a cell included in the optical modulation element.

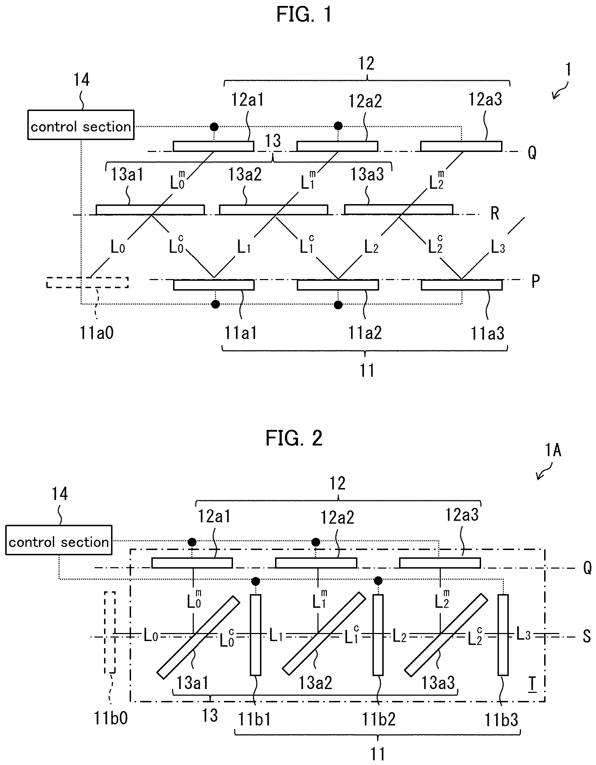

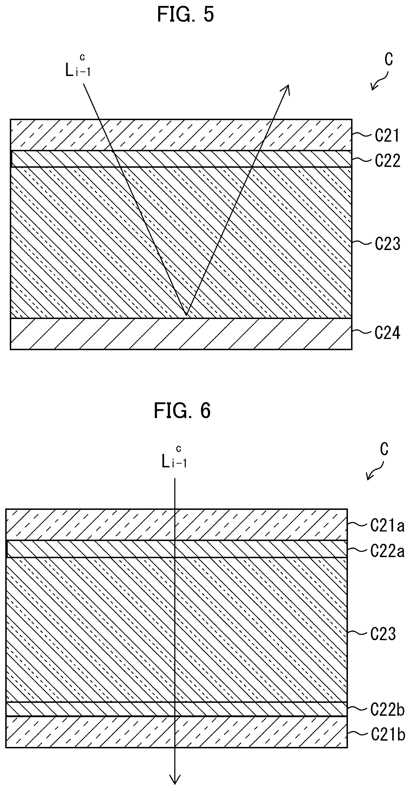

Fig. 5 is a cross-sectional view illustrating another reflective optical modulation element included in the optical computing device illustrated in Fig. 1.
Fig. 6 is a cross-sectional view illustrating another transmissive optical modulation element included in the optical computing device illustrated in Fig. 2.
(a) and (b) of Fig. 7 are block diagrams each illustrating a configuration in which an integrated circuit is used in place of a microcomputer as a control section illustrated in Fig. 1. In (a) of Fig. 7, cells of an optical modulation element are in a one-to-one correspondence to light receiving cells of an image sensor. In (b) of Fig. 7, cells of an optical modulation element are in a one-to-four correspondence to light receiving cells of an image sensor.

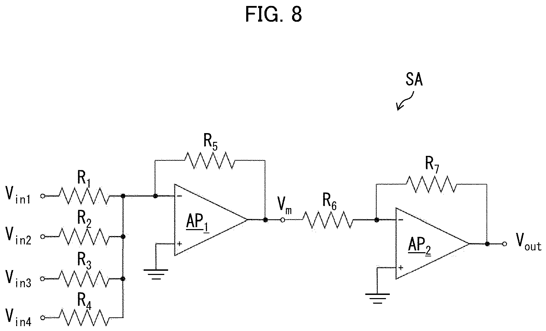

Fig. 8 is a circuit diagram illustrating an adding circuit illustrated in (b) of Fig. 7.

### Description of Embodiments

### (Configuration of optical computing device)

With reference to Fig. 1, the following will describe a configuration of an optical computing device 1 in accordance with an embodiment of the present invention. Fig. 1 is a block diagram illustrating a configuration of the optical computing device 1.

As illustrated in Fig. 1, the optical computing device 1 includes an optical modulation element group 11, an image sensor group 12, an optical splitter element group 13, and a control section 14.

The optical modulation element group 11 is a set of one or more reflective optical modulation elements 11a1 to 11an (n is any natural number of not less than 1). In the present embodiment, in order to realize multiple-stage optical computing, a set of three optical modulation elements 11a1 to 11a3 are used as the optical modulation element group 11. A reflective optical modulation element 11ai (i is a natural number of not less than 1 and not more than n) is a plate-like element including a plurality of cells having respective phase-modulation amounts that are settable independently of each other, and carries out optical computing such that (i) signal light beams are reflected by the respective cells while being phase-modulated and (ii) the signal light beams thus reflected are caused to interfere with each other. Note here that "carrying out optical computing" means to convert a two-dimensional intensity distribution of signal light, from a two-dimensional intensity distribution representing information before computing into a two-dimensional intensity distribution representing information after the computing. An example configuration of the reflective optical modulation element 11ai will be described later with reference to another drawing.

In the present embodiment, the optical modulation elements 11a1 to 11an are arranged in a row such that respective one main surfaces of the optical modulation elements 11ai (entrance/exit surfaces for signal light) are on an identical plane P. The optical modulation elements 11a1 to 11an may be integrated together. For example, the optical modulation elements 11a1 to 11an may be embedded in a single substrate, or n regions of a single optical modulation element may be used as the optical modulation elements 11a1 to 11an. Alternatively, n light diffraction layers formed inside a structure that allows signal light to pass therethrough, such as a dried gel may be used as the optical modulation elements 11a1 to 11an.

The image sensor group 12 is a set of image sensors 12a1 to 12an, the number of which is the same as the number of the optical modulation elements 11a1 to 11an. In Fig. 1, a set of three image sensors 12a1 to 12a3 is illustrated as an example of the image sensor group 12. Each image sensor 12ai is a plate-like element including one or more light receiving cells, and detects a two-dimensional intensity distribution of signal light. In the present embodiment, the cells of the optical modulation element 11ai are in a one-to-one correspondence to the light receiving cells of the image sensor 12ai. For example, in a case where the optical modulation element 11ai includes 200 × 200 cells arranged in matrix, the image sensor 12ai also includes 200 × 200 light receiving cells arranged in matrix. As such, an intensity of signal light entering each cell of the optical modulation element 11ai is detected by a light receiving cell of the image sensor 12ai which light receiving cell corresponds to the cell. Note that specific examples of each of the image sensors 12a1 to 12an include a charge coupled device (CCD) camera and a complementary metal oxide semiconductor (CMOS) camera.

In the present embodiment, the image sensors 12a1 to 12an are arranged in a row such that respective one main surfaces of the image sensors 12ai (entrance surfaces for signal light) are on an identical plane Q. Note that the plane Q is a plane parallel to the plane P described above. Note that the image sensors 12a1 to 12an may be integrated together. For example, the image sensors 12a1 to 12an may be embedded in a single substrate, or n regions of a single optical image sensor may be used as the image sensors 12a1 to 12an.

The optical splitter element group 13 is a set of optical splitter elements 13a1 to 13an the number of which is the same as the number of the optical modulation elements 11a1 to 11an. In Fig. 1, a set of three optical splitter elements 13a1 to 13a3 is illustrated as an example of the optical splitter element group 13. Each optical splitter element 13ai splits signal light into signal light for monitoring and signal light for computing. Each optical splitter element 13ai may be a half mirror, or may be a beam splitter.

In the present embodiment, the optical splitter elements 13a1 to 13an are arranged in a row such that respective reflective surfaces of the optical splitter elements 13ai are on an identical plane R. Note that the plane R is a plane that is located between the plane P and the plane Q described above and parallel to the plane P and the plane Q described above.

The control section 14 is a configuration for setting a phase-modulation amount of each cell of the optical modulation element 11ai in accordance with an intensity of signal light which intensity is detected by a light receiving cell of the image sensor 12ai, the light receiving cell corresponding to the cell. In the present embodiment, the control section 14 is a microcomputer which is an aspect of a computer. Note that, in an aspect of the present invention, the control section 14 can be a personal computer which is another aspect of a computer, or can be an integrated circuit. In a case where the control section 14 is an integrated circuit, the integrated circuit may be one which has a rewritable logic circuit (e.g. a field-programmable gate array (FPGA)) or may be one which has a non-rewritable logic circuit. The non-rewritable integrated circuit is a set of electronic circuits, constituted by a resister, an amplifier, and the like. That is, non-rewritable integrated circuit is an integrated circuit. The control section 14 constituted by such an integrated circuit will be described later with reference to Figs. 7 and 8.

Signal light Lo inputted to the optical computing device 1 is split by the optical splitter element 13a1 into signal light L₀^{m} for monitoring and signal light L₀^{c} for computing. The signal light L₀^{m} for monitoring is signal light that has passed through the optical splitter element 13a1, and the signal light L₀^{c} for computing is signal light that has been reflected by the optical splitter element 13a1. The signal light L₀^{m} for monitoring enters the image sensor 12a1. The signal light L₀^{c} for computing enters the optical modulation element 11a1. At this time, the control section 14 sets a phase-modulation amount of each cell of the optical modulation element 11a1, which acts on the signal light L₀^{c} for computing, in accordance with an intensity of the signal light L₀^{m} for monitoring which intensity is detected by a light receiving cell of the image sensor 12a1, the light receiving cell corresponding to the cell.

Signal light L₁ which has been reflected by the optical modulation element 11a1 is split by the optical splitter element 13a2 into signal light L₁^{m} for monitoring and signal light L₁^{c} for computing. The signal light L₁^{m} for monitoring is signal light that has passed through the optical splitter element 13a2, and the signal light L₁^{c} for computing is signal light that has been reflected by the optical splitter element 13a2. The signal light L₁^{m} for monitoring enters the image sensor 12a2. The signal light L₁^{c} for computing enters the optical modulation element 11a2. At this time, the control section 14 sets a phase-modulation amount of each cell of the optical modulation element 11a2, which acts on the signal light L₁^{c} for computing, in accordance with an intensity of the signal light L₁^{m} for monitoring which intensity is detected by a light receiving cell of the image sensor 12a2, the light receiving cell corresponding to the cell.

Signal light L₂ which has been reflected by the optical modulation element 11a2 is split by the optical splitter element 13a3 into signal light L₂^{m} for monitoring and signal light L₂^{c} for computing. The signal light L₂^{m} for monitoring is signal light that has passed through the optical splitter element 13a3, and the signal light L₂^{c} for computing is signal light that has been reflected by the optical splitter element 13a3. The signal light L₂^{m} for monitoring enters the image sensor 12a3. The signal light L₂^{c} for computing enters the optical modulation element 11a3. At this time, the control section 14 sets a phase-modulation amount of each cell of the optical modulation element 11a3, which acts on the signal light L₂^{c} for computing, in accordance with an intensity of the signal light L₂^{m} for monitoring which intensity is detected by a light receiving cell of the image sensor 12a3, the light receiving cell corresponding to the cell.

Signal light L₃ which has been reflected by the optical modulation element 11a3 is outputted to an outside as signal light indicative of a result of computation carried out by the optical computing device 1.

Note that although the present embodiment employs a configuration in which signal light Lo indicative of input information is inputted into the optical computing device 1, the present invention is not limited to this. For example, it is possible to employ a configuration in which an electrical signal indicative of input information and carrier light are inputted into the optical computing device 1. In this case, for example, an optical modulation element 11a0 (indicated by broken lines in Fig. 1) may be added to a stage preceding the optical modulation element 11a1, the optical modulation element 11a0 carrying out optical modulation of the carrier light with use of the electrical signal indicative of the input information to thereby generate signal light Lo indicative of an input signal.

A phase-modulation amount of each cell of an optical modulation element included in a conventional optical computing device is constant regardless of an intensity (light intensity) P of signal light that enters the cell. As such, when a phase of signal light that enters the cell is represented as ϕ and a phase-modulation amount in the cell is represented as Δϕ, a phase ϕ' of signal light that exits the cell is given by ϕ' = ϕ+Δϕ(constant). In other words, in a case where the signal light that enters the cell is expressed by a complex number P×e^{i×ϕ}, the signal light that exits the cell is expressed by a complex number P×e^{i×ϕ}×e^{i×Δθ}.

In contrast, a phase-modulation amount of each cell of the optical modulation element 11ai included in the optical computing device 1 in accordance with the present embodiment is determined in accordance with an intensity P of signal light Lᵢ₋₁^{c} for computing that enters the cell, i.e., an intensity P of signal light Lᵢ₋₁^{m} for monitoring which intensity P is detected by a light receiving cell of the image sensor 12ai, the light receiving cell corresponding to the cell. As such, when a phase of the signal light Lᵢ₋₁^{c} for computing that enters the cell is represented as ϕ and a phase-modulation amount in the cell is represented as Δϕ(P), a phase ϕ' of signal light Lᵢ that exits the cell is given by ϕ' = ϕ+Δϕ(P). In other words, in a case where the signal light Lᵢ₋₁^{c} for computing that enters the cell is expressed by a complex number Pe^{iϕ}, the signal light Lᵢ that exits the cell is expressed by a complex number P×e^{i×ϕ}×e^{i×Δθ(P)}. As such, according to the optical computing device 1 in accordance with the present embodiment, it is possible to carry out a wider variety of optical computing in comparison to a conventional optical computing device which carries out linear phase modulation at each cell of an optical modulation element.

Note that an intensity P^{c} of the signal light Lᵢ₋₁^{c} for computing and an intensity P^{m} of the signal light Lᵢ₋₁^{m} for monitoring may or may not coincide with each other. Even in the latter case, these intensities are in a proportional relationship of P^{c} = ρP^{m}, and it is therefore possible to control a phase-modulation amount in accordance with the intensity P^{c} of the signal light Lᵢ₋₁^{c} for computing. Note here that ρ is a constant determined in accordance with a ratio of division by the optical splitter element 13ai (a transmittance and a reflectance) and the like.

Note that, in the present embodiment, the control section 14 sets the phase-modulation amount Δϕ(P) of each cell of the optical modulation element 11ai in accordance with Δϕ(P) = P×α+β. Note here that α and β are each a constant determined for each cell of the optical modulation element 11ai. Note, however, that the present invention is not limited to this. That is, the phase-modulation amount Δϕ(P) of each cell and the intensity P of the signal light Lᵢ₋₁^{m} for monitoring detected by a light receiving cell of the image sensor 12ai which light receiving cell corresponds to the cell can be in any relationship with each other. For example, the control section 14 can set the phase-modulation amount Δϕ(P) of each cell of the optical modulation element 11ai such that Δϕ(P) = 0 in a case where P < P0 and Δϕ(P) = γ in a case where P ≥ P0. Note here that γ is a constant determined for each cell of the optical modulation element 11ai.

Note that a constant in the phase-modulation amount of each cell of the optical modulation element 11ai can be set, for example, through machine learning. A model used in this machine learning can be, for example, a model in which a two-dimensional intensity distribution of the signal light Lo inputted into the optical modulation element 11a1 is an input, and a two-dimensional intensity distribution of signal light Lₙ outputted from the optical modulation element 11an is an output and which includes a constant (in the above-described example, α, β, and γ) in a phase-modulation amount of each cell as a parameter. Note here that the two-dimensional intensity distribution of the signal light Lo inputted into the optical modulation element 11a1 means, for example, a set of intensities of signal light beams inputted into the respective cells included in the optical modulation element 11a1. Further, the two-dimensional intensity distribution of the signal light Lₙ outputted from the optical modulation element 11an means, for example, a set of intensities of signal light beams inputted into respective cells included in a two-dimensional image sensor provided in a stage subsequent to the optical modulation element 11an.

Note that the detection of the signal light Lᵢ₋₁^{m} for monitoring by each image sensor 12ai, the control of each optical modulation element 11ai by the control section 14, and the optical computing by each optical modulation element 11ai with respect to the signal light Lᵢ₋₁^{c} for computing are each a time-consuming process. As such, it takes time until respective phase-modulation amounts of all of the cells of each optical modulation element 11ai converge to a constant value and desired signal light Lₙ is outputted from the optical computing device 1. From this point of view, it is preferable that the control section 14 output, after respective phase-modulation amounts of all of the cells of each optical modulation element 11ai converge to a constant value, a signal (which may be an optical signal or may be an electrical signal) that indicates that signal light Lₙ indicative of a correct result of computation is outputted. This makes it possible to reduce a risk that an output destination to which this signal is outputted refers to signal light Lₙ indicative of an incorrect result of computation, which signal light Lₙ can be outputted from the optical computing device 1 before respective phase-modulation amounts of all of the cells of each optical modulation element 11ai converge to a constant value. Note that examples of the output destination to which the signal is outputted include a control section of a device that uses information indicated by the signal light Lₙ (the control section may be a computer connected to the device, or may be a microcomputer or an integrated circuit incorporated in the device).

Further, although the present embodiment employs a configuration in which cells of the optical modulation element 11ai are in a one-to-one correspondence to the light receiving cells of the image sensor 12ai, the present invention is not limited to this. For example, it is possible to employ a configuration in which the cells of the optical modulation element 11ai are in a one-to-K correspondence to the light receiving cells of the image sensor 12ai (K is a natural number of not less than 2). In this case, the control section 14 sets a phase-modulation amount Δϕ(P) of each cell of the optical modulation element 11ai in accordance with respective intensities P of signal light beams Lᵢ₋₁^{m} for monitoring which intensities P are detected by K light receiving cells of the image sensor 12ai, the K light receiving cells corresponding to the cell. A case in which K = 4 will be described later with reference to (b) of Fig. 7. Alternatively, it is possible to employ a configuration in which the cells of the optical modulation element 11ai are in an L-to-one correspondence to the light receiving cells of the image sensor 12ai (L is a natural number of not less than 2). In this case, the control section 14 sets respective phase-modulation amounts Δϕ(P) of L cells of the optical modulation element 11ai in accordance with an intensity P of signal light Lᵢ₋₁^{m} for monitoring which intensity P is detected by a single light receiving cell of the image sensor 12ai, the single light receiving cell corresponding to those cells. Note that L can be a total number of cells included in the optical modulation element 11ai. In this case, respective phase-modulation amounts Δϕ(P) of all of the cells of the optical modulation element 11ai are set in accordance with an intensity P of signal light Lᵢ₋₁^{m} for monitoring which intensity P is detected by a single light receiving cell of the image sensor 12ai, the single light receiving cell corresponding to those cells.

Further, in a case where n light diffraction layers formed inside a dried gel are used as the optical modulation elements 11a1 to 11an, it is preferable to use a gel that is subjected to dehydration shrinkage so that the gel shrinks while keeping a similar shape, e.g., a gel used in the Implosion Fabrication process. This makes it possible to, by drying a swollen gel in which n light diffraction layers are formed, easily manufacture the optical modulation element group 11 in which the optical modulation elements 11a1 to 11an are arranged with high precision.

### (Example configuration of reflective optical modulation element)

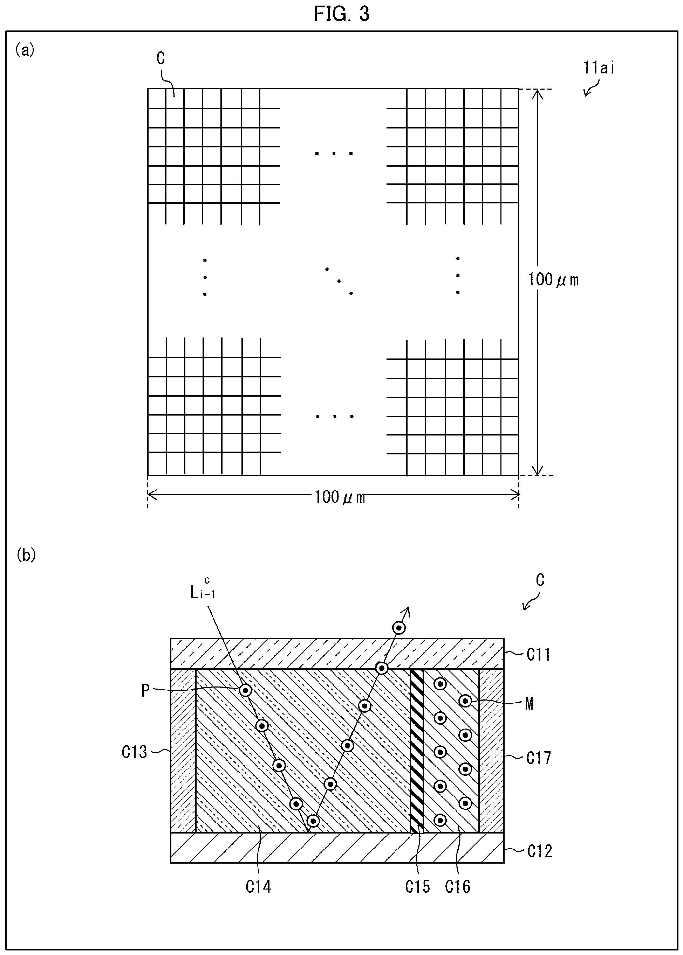

The following description will discuss, with reference to Fig. 3, an example configuration of a reflective optical modulation element 11ai included in the optical computing device 1. (a) of Fig. 3 is a plan view of an optical modulation element 11ai in accordance with the present specific example. (b) of Fig. 3 is a cross-sectional view of a microcell C included in the optical modulation element 11ai in accordance with the present specific example.

As shown in (a) of Fig. 3, the optical modulation element 11ai includes a plurality of microcells C having respective phase-modulation amounts that are set independently of each other. When signal light Lᵢ₋₁^{c} for computing enters the optical modulation element 11ai, the signal light Lᵢ₋₁^{c} for computing is reflected by the microcells C while being phase-modulated, and signal light beams Lᵢ₋₁^{c} for computing thus phase-modulated by the microcells C interfere with each other. Consequently, signal light Lᵢ indicative of a result of computation is formed.

In the present specification, "microcell" means a cell having a cell size of less than 10 pm, for example. Further, "cell size" means a square root of an area of a cell. For example, given that the microcell C is in the form of a square in a plan view, a cell size of the microcell C means a length of one side of the microcell C. A lower limit of the cell size of the microcell C is 1 nm, for example.

The optical modulation element 11ai shown in (a) of Fig. 3 as an example includes 200 × 200 microcells C arranged in matrix. A shape of each microcell C in a plan view is a square of 500 nm × 500 nm. A shape of the optical modulation element 11ai in a plan view is a square of 100 pm × 100 pm.

For example, as shown in (b) of Fig. 3, each microcell C included in the optical modulation element 11ai may include a polarizing plate C11, a reflecting plate C12, a first electrode C13, a magnetization free layer C14, an insulating layer C15, a magnetization fixed layer C16, and a second electrode C17.

The polarizing plate C11 and the reflecting plate C12 are disposed opposite to each other. The first electrode C13, the magnetization free layer C14, the insulating layer C15, the magnetization fixed layer C16, and the second electrode C17 are stacked in this order, and are sandwiched between the polarizing plate C11 and the reflecting plate C12. Here, a direction in which the first electrode C13, the magnetization free layer C14, the insulating layer C15, the magnetization fixed layer C16, and the second electrode C17 are stacked is orthogonal to a direction in which the polarizing plate C11 and the reflecting plate C12 are stacked. Thus, a first side surface of the magnetization free layer C14 is in surface contact with one of main surfaces of the polarizing plate C11, and a second side surface of the magnetization free layer C14 which is located opposite to the first side surface is in surface contact with one of main surfaces of the reflecting plate C12. The signal light Lᵢ₋₁^{c} for computing (1) enters an inside of the magnetization free layer C14 via the polarizing plate C11, (2) is reflected by the reflecting plate C12, and (3) is emitted through the polarizing plate C11 to an outside of the magnetization free layer C14.

The magnetization free layer C14 is made of, for example, a soft magnetic material having electric conductivity and light transmissivity (for example, CoFeB). The magnetization fixed layer C16 is made of, for example, a hard magnetic material having electric conductivity (for example, permalloy). Selected as the polarizing plate C11 is a polarizing plate that selectively allows, to pass therethrough, a polarized light component having a polarization direction P parallel to a magnetization direction M of the magnetization fixed layer C16. (b) of Fig. 3 takes as an example a case in which the magnetization direction M and the polarization direction P are parallel to both (i) the main surfaces of the polarizing plate C11 and (ii) main surfaces of the magnetization fixed layer C16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light Lᵢ₋₁^{c} for computing which enters the magnetization free layer C14 through the polarizing plate C11. This causes a phase of the signal light Lᵢ₋₁^{c} for computing to be delayed by a transverse Kerr effect during a process of transmission in the magnetization free layer C14.

Here, a phase-shift amount of the signal light Lᵢ₋₁^{c} for computing in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, controlling the potential difference provided between the first electrode C13 and the second electrode C17 enables the phase-modulation of the cell C to be set to a desired value.

Although the description in the present configuration example has discussed a microcell C having a configuration similar to that of a spin transfer torque (STT)-magnetoresistive random access memory (MRAM), this should not be construed as a limitation. For example, a microcell C having a configuration similar to a spin orbit torque (SOT)-MRAM may be used. Note that such a microcell C can be achieved by, for example, removing the insulating layer C15, the magnetization fixed layer C16, and the second electrode C17 from the structure shown in (b) of Fig. 3. In this case, for example, causing the first electrode C13 to contain heavy metal and providing a pulse voltage or a pulse current to the first electrode C13 enables the spin current to be efficiently injected into the magnetization free layer C14.

Further, the cell C can be configured in a similar manner to a cell of a liquid crystal on silicon (LCOS). In this case, the cell C includes, for example, a glass substrate C21, a transparent electrode C22, a liquid crystal layer C23, and a reflective electrode C24 as illustrated in Fig. 5. The glass substrate C21, the transparent electrode C22, the liquid crystal layer C23, and the reflective electrode C24 are stacked in this order from a side from which signal light Lᵢ₋₁^{c} for computing enters.

The signal light Lᵢ₋₁^{c} for computing (1) passes through the glass substrate C21 and the transparent electrode C22, (2) passes through the liquid crystal layer C23, (3) is reflected by the reflective electrode C24, (4) passes through the liquid crystal layer C23, and (5) passes through the transparent electrode C22 and the glass substrate C21. The liquid crystal layer C23 is made of liquid crystal molecules oriented in a direction parallel to main surfaces of the glass substrate C21, and has a refractive index according to a potential difference between the transparent electrode C22 and the reflective electrode C24. As such, the signal light Lᵢ₋₁^{c} for computing is phase-modulated when passing through the liquid crystal layer C23. A phase-modulation amount of the cell C can be set to a desired value by controlling a potential difference given between the transparent electrode C22 and the reflective electrode C24.

### (Variation of optical computing device)

The following description will discuss, with reference to Fig. 2, a variation (hereinafter referred to as an optical computing device 1A) of the optical computing device 1. Fig. 2 is a block diagram illustrating a configuration of the optical computing device 1A.

The optical computing device 1A includes an optical modulation element group 11, an image sensor group 12, an optical splitter element group 13, and a control section 14, similarly as the optical computing device 1. The difference between the optical computing device 1 and the optical computing device 1A is (1) the optical modulation element group 11 which includes transmissive optical modulation elements 11b1 to 11bn and (2) positional arrangement of the optical modulation elements 11b1 to 11bn included in the optical modulation element group 11 and optical splitter elements 13a1 to 13an included in the optical splitter element group 13.

A transmissive optical modulation element 11bi includes a plurality of cells having respective phase-modulation amounts that are settable independently of each other, and carries out optical computing such that (i) the signal light beams pass through the respective cells while being phase-modulated and (ii) the signal light beams that have passed through the respective cells are caused to interfere with each other. An example configuration of the transmissive optical modulation element 11bi will be described later with reference to another drawing.

In the present variation, the optical modulation elements 11b1 to 11bn are arranged in a row on a straight line S such that main surfaces of each optical modulation element 11bi (an entrance surface and an exit surface for signal light) are orthogonal to a plane Q. Note that the plane Q is a plane on which one main surface of each image sensor 12ai (an entrance surface for signal light) is provided, and the straight line S is a straight line that is parallel to the plane Q.

The optical splitter element 13a1 is provided on the straight line S in a stage preceding the optical modulation element 11b1. An optical splitter element 13aj (j is a natural number of not less than 2 and not more than n) is provided on the straight line S in a stage that is subsequent to an optical modulation element 11bj-1 and that precedes an optical modulation element 11bj. An orientation of the optical splitter element 13ai is determined such that: a normal line of a reflective surface of the optical splitter element 13ai is contained in a plane T; the reflective surface of the optical splitter element 13ai and the straight line S form an angle of 45° therebetween; and signal light Lᵢ₋₁^{m} for monitoring is directed to the image sensor 12ai. Note that the plane T is a plane that contains the straight line S and that is orthogonal to the plane Q.

Signal light Lo inputted to the optical computing device 1A is split by the optical splitter element 13a1 into signal light L₀^{m} for monitoring and signal light L₀^{c} for computing. The signal light L₀^{m} for monitoring is signal light that has been reflected by the optical splitter element 13a1, and the signal light L₀^{c} for computing is signal light that has passed through the optical splitter element 13a1. The signal light L₀^{m} for monitoring enters the image sensor 12a1. The signal light L₀^{c} for computing enters the optical modulation element 11b1. At this time, the control section 14 sets a phase-modulation amount of each cell of the optical modulation element 11b1, which acts on the signal light L₀^{c} for computing, in accordance with an intensity of the signal light L₀^{m} for monitoring which intensity is detected by a light receiving cell of the image sensor 12a1, the light receiving cell corresponding to the cell.

Signal light L₁ which has passed through the optical modulation element 11b1 is split by the optical splitter element 13a2 into signal light L₁^{m} for monitoring and signal light L₁^{c} for computing. The signal light L₁^{m} for monitoring is signal light that has been reflected by the optical splitter element 13a2, and the signal light L₁^{c} for computing is signal light that has passed through the optical splitter element 13a2. The signal light L₁^{m} for monitoring enters an image sensor 12a2. The signal light L₁^{c} for computing enters an optical modulation element 11b2. At this time, the control section 14 sets a phase-modulation amount of each cell of the optical modulation element 11b2, which acts on the signal light L₁^{c} for computing, in accordance with an intensity of the signal light L₁^{m} for monitoring which intensity is detected by a light receiving cell of the image sensor 12a2, the light receiving cell corresponding to the cell.

Signal light L₂ which has passed through the optical modulation element 11b2 is split by an optical splitter element 13a3 into signal light L₂^{m} for monitoring and signal light L₂^{c} for computing. The signal light L₂^{m} for monitoring is signal light that has been reflected by the optical splitter element 13a3, and the signal light L₂^{c} for computing is signal light that has passed through the optical splitter element 13a3. The signal light L₂^{m} for monitoring enters an image sensor 12a3. The signal light L₂^{c} for computing enters an optical modulation element 11b3. At this time, the control section 14 sets a phase-modulation amount of each cell of the optical modulation element 11b3, which acts on the signal light L₂^{c} for computing, in accordance with an intensity of the signal light L₂^{m} for monitoring which intensity is detected by a light receiving cell of the image sensor 12a3, the light receiving cell corresponding to the cell.

Signal light L₃ which has passed through the optical modulation element 11b3 is outputted to an outside as signal light indicative of a result of computation carried out by the optical computing device 1A.

Note that although the present embodiment employs a configuration in which signal light Lo indicative of input information is inputted into the optical computing device 1A, the present invention is not limited to this. For example, it is possible to employ a configuration in which an electrical signal indicative of input information and carrier light are inputted into the optical computing device 1A. In this case, for example, an optical modulation element 11b0 (illustrated with use of broken lines in Fig. 2), which carries out optical modulation of the carrier light with use of the electrical signal indicative of the input information to thereby generate signal light Lo indicative of an input signal, may be added to a stage preceding the optical modulation element 11b1.

A phase-modulation amount of each cell of the optical modulation element 11bi included in the optical computing device 1A in accordance with the present variation is determined in accordance with an intensity P of signal light Lᵢ₋₁^{c} for computing that enters the cell, i.e., an intensity P of signal light Lᵢ₋₁^{m} for monitoring which intensity P is detected by a light receiving cell of the image sensor 12ai, the light receiving cell corresponding to the cell. As such, when a phase of signal light Lᵢ₋₁^{c} for computing that enters the cell is represented as ϕ and a phase-modulation amount in the cell is represented as Δϕ(P), a phase ϕ' of signal light Lᵢ that exits the cell is given by ϕ' = ϕ+Δϕ(P). In other words, when signal light Lᵢ₋₁^{c} for computing that enters each cell is expressed by a complex number Pe^{iϕ}, signal light Lᵢ that exits the cell is expressed by a complex number Pe^{iϕ}×e^{iΔθ(P)}. As such, according to the optical computing device 1A in accordance with the present variation, it is possible to carry out a wider variety of optical computing in comparison to a conventional optical computing device which carries out linear phase modulation at each cell of an optical modulation element.

Note that an intensity P^{c} of the signal light Lᵢ₋₁^{c} for computing and an intensity P^{m} of the signal light Lᵢ₋₁^{m} for monitoring may or may not coincide with each other. Even in the latter case, these intensities are in a proportional relationship of P^{c} = ρP^{m}, and it is therefore possible to control a phase-modulation amount in accordance with the intensity P^{c} of the signal light Lᵢ₋₁^{c} for computing. Note here that ρ is a constant determined in accordance with a ratio of division by the optical splitter element 13ai (a transmittance and a reflectance) and the like.

Note that, in the present variation, the control section 14 sets a phase-modulation amount Δϕ(P) of each cell of the optical modulation element 11bi in accordance with Δϕ(P) = P×α+β. Note here that α and β are each a constant determined for each cell of the optical modulation element 11bi. Note, however, that the present invention is not limited to this. That is, the phase-modulation amount Δϕ(P) of each cell and the intensity P of the signal light Lᵢ₋₁^{m} for monitoring detected by a light receiving cell of the image sensor 12ai which light receiving cell corresponds to the cell can be in any relationship with each other. For example, the control section 14 can set the phase-modulation amount Δϕ(P) of each cell of the optical modulation element 11bi such that Δϕ(P) = 0 in a case where P < P0 and Δϕ(P) = γ in a case where P ≥ P0. Note here that γ is a constant determined for each cell of the optical modulation element 11bi.

Note that a constant in the phase-modulation amount of each cell of the optical modulation element 11bi can be set, for example, through machine learning. A model used in this machine learning can be, for example, a model in which a two-dimensional intensity distribution of the signal light Lo inputted into the optical modulation element 11b1 is an input, and a two-dimensional intensity distribution of signal light Lₙ outputted from the optical modulation element 11bn is an output and which includes a constant (in the above-described example, α, β, and γ) in a phase-modulation amount of each cell as a parameter. Note here that the two-dimensional intensity distribution of the signal light Lo inputted into the optical modulation element 11b1 means, for example, a set of intensities of signal light beams inputted into the respective cells included in the optical modulation element 11b1. Further, the two-dimensional intensity distribution of the signal light Lₙ outputted from the optical modulation element 11bn means, for example, a set of intensities of signal light beams inputted into respective cells included in a two-dimensional image sensor provided in a stage subsequent to the optical modulation element 11bn.

### (Example configuration of transmissive optical modulation element)

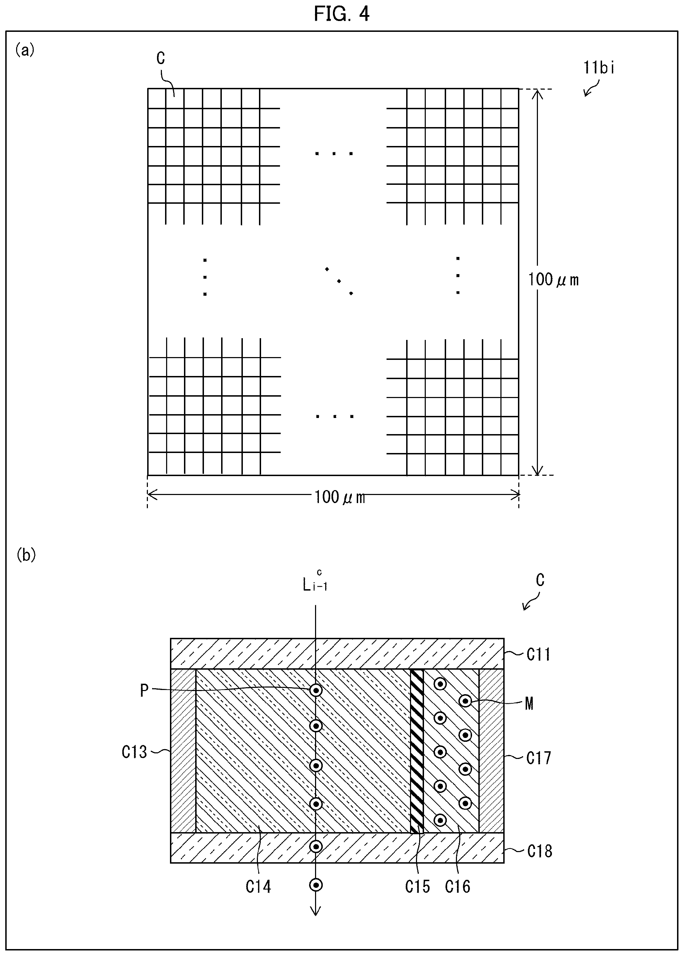

The following description will discuss, with reference to Fig. 4, an example configuration of a transmissive optical modulation element 11bi included in the optical computing device 1A. (a) of Fig. 4 is a plan view of an optical modulation element 11bi in accordance with the present specific example. (b) of Fig. 4 is a cross-sectional view of a microcell C included in the optical modulation element 11bi in accordance with the present specific example.

As shown in (a) of Fig. 4, the optical modulation element 11bi includes a plurality of microcells C having respective phase-modulation amounts that are set independently of each other. When signal light Lᵢ₋₁^{c} for computing enters the optical modulation element 11bi, the signal light Lᵢ₋₁^{c} for computing passes through the microcells C while being phase-modulated, and signal light beams Lᵢ₋₁^{c} for computing thus phase-modulated by the microcells C interfere with each other. Consequently, signal light Lᵢ indicative of a result of computation is formed.

The optical modulation element 11bi shown in (a) of Fig. 4 as an example includes 200 × 200 microcells C arranged in matrix. A shape of each microcell C in a plan view is a square of 500 nm × 500 nm. A shape of the optical modulation element 11bi in a plan view is a square of 100 pm × 100 pm.

For example, as shown in (b) of Fig. 4, each microcell C included in the optical modulation element 11bi may include a polarizing plate C11, a polarizing plate C18, a first electrode C13, a magnetization free layer C14, an insulating layer C15, a magnetization fixed layer C16, and a second electrode C17.

The polarizing plate C11 and the polarizing plate C18 are disposed opposite to each other. The first electrode C13, the magnetization free layer C14, the insulating layer C15, the magnetization fixed layer C16, and the second electrode C17 are stacked in this order, and are sandwiched between the polarizing plate C11 and the polarizing plate C18. Here, a direction in which the first electrode C13, the magnetization free layer C14, the insulating layer C15, the magnetization fixed layer C16, and the second electrode C17 are stacked is orthogonal to a direction in which the polarizing plate C11 and the polarizing plate C18 are stacked. Thus, a first side surface of the magnetization free layer C14 is in surface contact with one of main surfaces of the polarizing plate C11, and a second side surface of the magnetization free layer C14 which is located opposite to the first side surface is in surface contact with one of main surfaces of the polarizing plate C18. The signal light Lᵢ₋₁^{c} for computing (1) enters an inside of the magnetization free layer C14 via the polarizing plate C11, (2) passes through the magnetization free layer C14, and (3) is emitted through the polarizing plate C18 to an outside of the magnetization free layer C14.

The magnetization free layer C14 is made of, for example, a soft magnetic material having electric conductivity and light transmissivity (for example, CoFeB). The magnetization fixed layer C16 is made of, for example, a hard magnetic material having electric conductivity (for example, permalloy). Selected as the polarizing plate C11 and the polarizing plate C18 is a polarizing plate that selectively allows, to pass therethrough, a polarized light component having a polarization direction P parallel to a magnetization direction M of the magnetization fixed layer C16. (b) of Fig. 4 takes as an example a case in which the magnetization direction M and the polarization direction P are parallel to both (i) the main surfaces of the polarizing plate C11 and (ii) main surfaces of the magnetization fixed layer C16.

When a potential difference is provided between the first electrode C13 and the second electrode C17, a tunnel effect occurs and injects a spin current (a flow of spin-polarized electrons) from the magnetization fixed layer C16 through the insulating layer C15 into the magnetization free layer C14 to magnetize the magnetization free layer C14. Here, the magnetization occurring in the magnetization free layer C14 is magnetization parallel to the magnetization direction M of the magnetization fixed layer C16, that is, magnetization parallel to the polarization direction P of the signal light Lᵢ₋₁^{c} for computing which enters the magnetization free layer C14 through the polarizing plate C11. This causes a phase of the signal light Lᵢ₋₁^{c} for computing to be delayed by a transverse Kerr effect during a process of transmission in the magnetization free layer C14.

Here, a phase-shift amount of the signal light Lᵢ₋₁^{c} for computing in the cell C is determined depending on a magnitude of the magnetization in the magnetization free layer C14. The magnitude of the magnetization in the magnetization free layer C14 is determined depending on a magnitude of the spin current injected into the magnetization free layer C14. The magnitude of the spin current injected into the magnetization free layer C14 is determined depending on the potential difference provided between the first electrode C13 and the second electrode C17. Thus, controlling the potential difference provided between the first electrode C13 and the second electrode C17 enables the phase-modulation of the cell C to be set to a desired value.

Although the description in the present configuration example has discussed a microcell C having a configuration similar to that of a spin transfer torque (STT)-magnetoresistive random access memory (MRAM), this should not be construed as a limitation. For example, a microcell C having a configuration similar to a spin orbit torque (SOT)-MRAM may be used. Note that such a microcell C can be achieved by, for example, removing the insulating layer C15, the magnetization fixed layer C16, and the second electrode C17 from the structure shown in (b) of Fig. 4. In this case, for example, causing the first electrode C13 to contain heavy metal and providing a pulse voltage or a pulse current to the first electrode C13 enables the spin current to be efficiently injected into the magnetization free layer C14.

Further, the cell C can be configured in a similar manner to a cell of a liquid crystal display (LCD). In this case, the cell C includes, for example, a first glass substrate C21a, a first transparent electrode C22a, a liquid crystal layer C23, a second transparent electrode C22b, and a second glass substrate C21b as illustrated in Fig. 6. The first glass substrate C21a, the first transparent electrode C22a, the liquid crystal layer C23, the second transparent electrode C22b, and the second glass substrate C21b are stacked in this order from a side from which signal light Lᵢ₋₁^{c} for computing enters.

The signal light Lᵢ₋₁^{c} for computing (1) passes through the first glass substrate C21a and the first transparent electrode C22a, (2) passes through the liquid crystal layer C23, and (3) passes through the second transparent electrode C22b and the second glass substrate C21b. The liquid crystal layer C23 is made of liquid crystal molecules oriented in a direction parallel to main surfaces of the glass substrate C21, and has a refractive index according to a potential difference between the first transparent electrode C22a and the second transparent electrode C22b. As such, the signal light Lᵢ₋₁^{c} for computing is phase-modulated when passing through the liquid crystal layer C23. A phase-modulation amount of the cell C can be set to a desired value by controlling a potential difference given between the first transparent electrode C22a and the second transparent electrode C22b.

### (Variation of control section)

The following description will discuss, with reference to Figs. 7 and 8, a variation of the control section 14 illustrated in Fig. 1. (a) and (b) of Fig. 7 are block diagrams each illustrating a configuration in which an integrated circuit is used in place of a microcomputer as the control section 14. In (a) and (b) of Fig. 7, an optical modulation element 11a1 is illustrated as an example of the optical modulation element 11ai, and an image sensor 12a1 is illustrated as an example of the image sensor 12ai. Fig. 8 is a circuit diagram illustrating an adding circuit SA illustrated in (b) of Fig. 7.

Note that, in (a) of Fig. 7, cells C of the optical modulation element 11a1 are in a one-to-one correspondence to light receiving cells PDC of the image sensor 12a1. In (b) of Fig. 7, cells C of the optical modulation element 11a1 are in a one-to-four correspondence to light receiving cells PDC of the image sensor 12a1. That is, in the configuration illustrated in (b) of Fig. 7, the light receiving cells PDC in the image sensor 12a1 have a vertical resolution and a horizontal resolution each of which is twice as high as that in the configuration illustrated in (a) of Fig. 7, and together, four times as high as those in the configuration illustrated in (a) of Fig. 7. In (a) and (b) of Fig. 7, an arrow between a cell C and a light receiving cell PDC facing each other represents that the cell C and the light receiving cell PDC facing each other face each other.

In the present variation, a voltage-dividing circuit VD consisting of two resistors Rₐ and R_{b} is used as the control section 14 which sets a phase-modulation amount of each cell C of the optical modulation element 11a1 in accordance with an intensity of signal light for monitoring which intensity is detected by a light receiving cell PDC corresponding to the cell C. With use of the voltage-dividing circuit VD, a voltage corresponding to the intensity of the signal light for monitoring which intensity is detected by the light receiving cell PDC is divided in accordance with a ratio between respective resistance values of the resistors Rₐ and R_{b}, and a voltage corresponding to R_{b}/(Rₐ+R_{b}) is applied to the cell C. The voltage applied from the voltage-dividing circuit VD to the cell C corresponds to α in a phase-modulation amount Δϕ(P) = P×α+β of each cell C of the optical modulation element 11ai, which phase-modulation amount Δϕ(P) is set by the control section 14.

For example, in a case where the optical modulation element 11a1 includes 200 × 200 cells C and the image sensor 12a1 includes 200 × 200 light receiving cells PDC, the control section 14 corresponding to the optical modulation element 11a1 and the image sensor 12a1 is constituted by an integrated circuit including 200 × 200 voltage-dividing circuits VD.

Note that, in a case where the cells C of the optical modulation element 11a1 are in an L-to-one correspondence to the light receiving cells PDC of the image sensor 12a1 (that is, each cell C is constituted by L subcells), the single voltage-dividing circuit VD illustrated in each of (a) and (b) of Fig. 7 may be replaced by L voltage-dividing circuits that are provided in parallel to each other. Since each voltage-dividing circuit corresponds to a subcell of a cell C, a voltage divided by the each dividing circuit is applied to the subcell of the cell C. Since each subcell is provided with a corresponding voltage-dividing circuit, a voltage to be applied after being divided can be adjusted for each subcell.

Further, in a case where the cells C of the optical modulation element 11a1 are in a one-to-four correspondence to the light receiving cells PDC of the image sensor 12a1 as illustrated in (b) of Fig. 7, each light receiving cell PDC is constituted by sub-light receiving cells PDC1 and PDC2 and two sub-light receiving cells that are not shown in (b) of Fig. 7. In this case, an intensity of signal light for monitoring detected by a light receiving cell PDC corresponding to a cell C is given by an average of respective intensities of signal light beams for monitoring which intensities are detected by the above-described four sub-light receiving cells. In the configuration illustrated in (b) of Fig. 7, the adding circuit SA is used in order to obtain the average of the intensities of the signal light beams for monitoring detected by the four sub-light receiving cells.

The adding circuit SA includes two amplifiers AP₁ and AP₂ and seven resistors R₁ to R₇ as illustrated in Fig. 8. In the present variation, the adding circuit AP is configured such that respective resistance values of the resistors R₁ to R₄ are equal to each other, a resistance value of R₅ is a quarter of that of each of R₁ to R₄, and respective resistance values of the resistors R₆ and R₇ are equal to each other. In the adding circuit AP thus configured, in a case where voltages Vin₁ to Vin₄ respectively corresponding to the intensities of the signal light beams for monitoring which intensities are detected by the four sub-light receiving cells are inputted to four input ports, Vm = - (Vin₁+Vin₂+Vin₃+Vin₄)/4 is obtained at an intermediate port, and Vout = (Vin₁+Vin₂+Vin₃+Vin₄)/4 is obtained at an output port.

Note that the present variation employs, as the image sensor 12ai, an image sensor that includes a light receiving cell PDC outputting a voltage corresponding to a detected intensity of signal light for monitoring. In an aspect of the present invention, however, it is also possible to employ, as the image sensor 12ai, an image sensor that includes a light receiving cell PDC outputting an electric current (electric charge) corresponding to a detected intensity of signal light for monitoring. Examples of the image sensor that includes a light receiving cell PDC outputting a voltage include a CMOS camera, and examples of the image sensor that includes a light receiving cell PDC outputting an electric current include a CCD camera. Note that, in the case where the image sensor that includes a light receiving cell PDC outputting an electric current is employed, a transimpedance amplifier may be provided in a stage subsequent to the light receiving cell PDC, and the outputted electric current may be converted into a voltage. According to this configuration, it is possible to apply the voltage-dividing circuit VD and the adding circuit SA described above, similarly as in the case where a light receiving cell outputting a voltage is employed.

Aspects of the present invention can also be expressed as follows:
An optical computing device in accordance with Aspect 1 of the present invention is an optical computing device, including: an image sensor including one or more light receiving cells; an optical modulation element including a plurality of cells having respective phase-modulation amounts that are settable independently of each other; an optical splitter element that splits signal light into signal light for monitoring and signal light for computing, the signal light for monitoring entering the image sensor, the signal light for computing entering the optical modulation element; and a control section that sets a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.

According to the above configuration, it is possible to carry out a wider variety of optical computing in comparison to a conventional optical computing device which carries out linear phase modulation at each cell of an optical modulation element.

An optical computing device in accordance with Aspect 2 of the present invention employs, in addition to the configuration of Aspect 1, a configuration in which the control section sets a phase-modulation amount Δϕ(P) of each of the plurality of cells of the optical modulation element in accordance with Δϕ(P) = P×α+β where P is an intensity of the signal light for monitoring which intensity is detected by a cell of the image sensor, the light receiving cell corresponding to the each of the plurality of cells, and α and β are each a constant.

According to the above configuration, it is possible to carry out a wider variety of optical computing in comparison to a conventional optical computing device which carries out linear phase modulation at each cell of an optical modulation element.

An optical computing device in accordance with Aspect 3 of the present invention employs, in addition to the configuration of Aspect 1 or 2, a configuration in which: a plurality of reflective optical modulation elements are provided as the optical modulation element; the signal light for monitoring is signal light that has passed through the optical splitter element; and the signal light for computing is signal light that has been reflected by the optical splitter element.

According to the above configuration, it is possible to carry out multi-stage optical computing with use of the reflective optical modulation elements.

An optical computing device in accordance with Aspect 4 of the present invention employs, in addition to the configuration of Aspect 3, a configuration in which the plurality of reflective optical modulation elements are integral with each other.

According to the above configuration, it is possible to reduce the number of components included in the optical computing device. Further, it is possible to omit adjustment of alignment between the reflective optical modulation elements, which adjustment is required in a case where a plurality of reflective optical modulation elements are separate members.

An optical computing device in accordance with Aspect 5 of the present invention employs, in addition to the configuration of Aspect 1 or 2, a configuration in which: a plurality of transmissive optical modulation elements are provided as the optical modulation element; the signal light for monitoring is signal light that has been reflected by the optical splitter element; and the signal light for computing is signal light that has passed through the optical splitter element.

According to the above configuration, it is possible to carry out multi-stage optical computing with use of the transmissive optical modulation elements.

An optical computing device in accordance with Aspect 6 of the present invention employs, in addition to the configuration of any one of Aspects 1 to 5, a configuration in which: a plurality of combinations each consisting of the optical modulation element, the image sensor, and the optical splitter element are provided in multiple stages; and into the optical splitter element in each of second and subsequent stages, signal light generated by an optical modulation element in a stage preceding the each of the second and subsequent stages is inputted.

According to the above configuration, it is possible to carry out multi-stage optical computing.

An optical computing device in accordance with Aspect 7 of the present invention employs, in addition to the configuration of any one of Aspects 1 to 6, a configuration in which the control section outputs, after respective phase-modulation amounts of all of the plurality of cells of the optical modulation element converge to a constant value, a signal that indicates that signal light representing a correct result of computation is outputted.

According to the above configuration, it is possible to reduce a risk that an output destination to which the signal is outputted refers to signal light indicative of an incorrect result of computation, which signal light can be outputted from the optical computing device before respective phase-modulation amounts of all of the cells of the optical modulation element converge to a constant value.

A control method in accordance with Aspect 8 of the present invention is a method for controlling an optical computing device, the optical computing device including: an image sensor including one or more light receiving cells; an optical modulation element including a plurality of cells having respective phase-modulation amounts that are settable independently of each other; and an optical splitter element that splits signal light into signal light for monitoring and signal light for computing, the signal light for monitoring entering the image sensor, the signal light for computing entering the optical modulation element, the method including the step of setting a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.

According to the above method, it is possible to carry out a wider variety of optical computing in comparison to a conventional optical computing device which carries out linear phase modulation at each cell of an optical modulation element.

### (Supplementary note)

The present invention is not limited to the foregoing embodiments, but can be modified by a person skilled in the art within the scope of the claims. The present invention also encompasses, in its technical scope, another embodiment derived by combining technical means disclosed in the above embodiments as appropriate.

### Reference Signs List

1: Optical computing device
11: Optical modulation element group
11a1 to 11an: Optical modulation element (reflective)
11b1 to 11bn: Optical modulation element (transmissive)
12: Image sensor group
12a1 to 12an: Image sensor
13: Optical splitter element group
13a1 to 13an: optical splitter element

## Claims

1. An optical computing device, comprising:
an image sensor including one or more light receiving cells;
an optical modulation element including a plurality of cells having respective phase-modulation amounts that are settable independently of each other;
an optical splitter element that splits signal light into signal light for monitoring and signal light for computing, the signal light for monitoring entering the image sensor, the signal light for computing entering the optical modulation element; and
a control section that sets a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.

2. The optical computing device as set forth in claim 1, wherein the control section sets a phase-modulation amount Δϕ(P) of each of the plurality of cells of the optical modulation element in accordance with Δϕ(P) = P×α+β where P is an intensity of the signal light for monitoring which intensity is detected by a light receiving cell of the image sensor, the light receiving cell corresponding to the each of the plurality of cells, and α and β are each a constant.

3. The optical computing device as set forth in claim 1 or 2, wherein:
a plurality of reflective optical modulation elements are provided as the optical modulation element;
the signal light for monitoring is signal light that has passed through the optical splitter element; and
the signal light for computing is signal light that has been reflected by the optical splitter element.

4. The optical computing device as set forth in claim 3, wherein the plurality of reflective optical modulation elements are integral with each other.

5. The optical computing device as set forth in claim 1 or 2, wherein:
a plurality of transmissive optical modulation elements are provided as the optical modulation element;
the signal light for monitoring is signal light that has been reflected by the optical splitter element; and
the signal light for computing is signal light that has passed through the optical splitter element.

6. The optical computing device as set forth in any one of claims 1 to 5, wherein:
a plurality of combinations each consisting of the optical modulation element, the image sensor, and the optical splitter element are provided in multiple stages; and
into the optical splitter element in each of second and subsequent stages, signal light generated by an optical modulation element in a stage preceding the each of the second and subsequent stages is inputted.

7. The optical computing device as set forth in any one of claims 1 to 6, wherein the control section outputs, after respective phase-modulation amounts of all of the plurality of cells of the optical modulation element converge to a constant value, a signal that indicates that signal light representing a correct result of computation is outputted.

8. A method for controlling an optical computing device, the optical computing device including:
an image sensor including one or more light receiving cells;
an optical modulation element including a plurality of cells having respective phase-modulation amounts that are settable independently of each other; and
an optical splitter element that splits signal light into signal light for monitoring and signal light for computing, the signal light for monitoring entering the image sensor, the signal light for computing entering the optical modulation element,
the method comprising the step of setting a phase-modulation amount of each of the plurality of cells of the optical modulation element in accordance with an intensity of the signal light for monitoring which intensity is detected by a light receiving cell of the image sensor, the light receiving cell corresponding to the each of the plurality of cells.
